# EUROPEAN PATENT SPECIFICATION

(11) **EP 0 854 965 B1**
(45) Date of publication and mention of the grant of the patent: **28.05.2003**
(21) Application number: 97936373.6
(22) Date of filing: 04.08.1997
(51) Int. Cl.: E05C 5/04

(54) **SELF-ALIGNING FASTENER SYSTEM**
SELBSTAUSRICHTENDES BEFESTIGUNGSSYSTEM
SYSTEME DE FIXATION A ALIGNEMENT AUTOMATIQUE

(30) Priority: 13.08.1996 US 696298
(43) Date of publication of application: 29.07.1998
(73) Proprietor: Fairchild Holding Corp., Dulles, Virginia 20166-7516 (US)
(72) Inventor: JENSEN, Carl, B., Torrance, CA 90505 (US)
(74) Representative: Weydert, Robert
(86) International application number: US9713635
(87) International publication number: WO98006917

(56) References cited:
- EP-A- 0 506 522
- EP-A- 0 617 190
- EP-A- 0 635 648
- FR-E- 26 670
- US-A- 930 810
- US-A- 2 331 322
- US-A- 2 900 196
- US-A- 4 038 801
- US-A- 4 971 497
- US-A- 5 462 395
- US-A- 5 540 514

## Description

### BACKGROUND OF THE INVENTION

### 1. Field of the Invention

The present invention provides a fastener assembly having the head portion of a bolt installed within a grommet assembly that is then installed in a panel, the threaded portion of the bolt having the capability of swiveling enabling the shaft to be inserted into a misaligned aperture in a mating structure or enabling the panel to swivel around the bolt head portion as the panel is installed and pulled into shape or lifted out of engagement with the mating structure.

### 2. Description of the Prior Art

Aircraft access panels are typically positioned into or lifted out of engagement with the aircraft mating structure, fastener assemblies commonly being utilized to pull the panel into position and to secure the panel to the mating structure and, by hand, lifting the panel out of engagement with the mating structure. If the panel contour is curved and/or required to produce a hinge-line motion/geometry, problems arise since misalignment of the panel to the mating structure may occur. This causes damage to the panel, mating structure and fastener assemblies, the damage worsening over time through repeated installation and removal cycles of the panel. This damage is particularly acute with panels and structures made from composites (non-metallic) materials. In addition, some applications, for aero-dynamic or other reasons, require the fastener assembly securing the panel to the mating structure to remain flush to the outer surface of the panel when in the installed position. The fastener assembly also must, when required, be capable of accommodating misalignment of the holes (panel and mating structure) up to a predetermined minimum angle while remaining capable of carrying full static and dynamic design loads of the panel/mating structure interface.

Conventional prior art fastener assemblies were used to secure a panel having a substantially planar contacting surface to a mating surface having a matching contour and thus would not be useful with panels have a simple curved (along one axis of the panel) or compound curved (along two or more axis' of the panel) contour. Conventional prior art fastener assemblies also do not provide a means for lifting a panel out of engagement with a mating structure while accommodating the hinge-line motion/geometry of the panel during removal.

What is thus desired is to provide a fastener assembly for securing composite panels having curved contours to a mating structure, the fastener assembly being capable of accommodating hinge-line motion geometry and misalignment of the panel and mating structure up to a predetermined minimum angle as the panel is pulled into the installed contour or position in/on the mating structure. The fastener assembly must also be capable of lifting the panel from engagement with the mating structure while accommodating the hinge-line motion/geometry and misalignment of the panel and mating structure up to a predetermined minimum angle as the panel is being removed. The fastener assembly must also, when required, be capable of carrying the full static and dynamic loads of the panel/mating structure interface and be flush to the outer surface of the panel when in the installed position.

In EP-A-0 617 190 there is disclosed a fastener means, of the type defined in the precharacterizing portion of the independent claim 1 that serves for mounting a panel on a supporting structure. When the plug member is removed from the grommet to gain access to the stud bolt, the stud bolt is no longer captured in the grommet/plug assembly and the panel cannot be lifted out of engagement with the mating structure when the bolt is unscrewed.

### SUMMARY OF THE PRESENT INVENTION

The object of the present invention is to provide a fastener assembly for use in securing composite panels having curved contours to a mating structure, which fastener assembly is capable to lift the panel from engagement with the mating structure while accommodating the hinge-line motion/geometry and misalingment of the panel and mating structure up to a predetermined minimum angle as the panel is being removed.

To achieve this, there is provided in accordance with the invention a fastener assembly including a bolt having the capability of swivelling to locate and be inserted into an aperture formed in a mating structure comprising:
an annular grommet having an externally threaded portion, an internally threaded hollow portion which opens out through one axial end of said grommet and a spherical hollow portion which opens out through the other, opposite axial end of said grommet; a stud bolt having a head that is spherically shaped and a threaded shaft portion; an externally threaded plug member, the plug member being threadably engaged with the internal threaded hollow portion of said grommet to form a spherical cavity for receiving the spherical head portion of said stud bolt and with said threaded shaft portion extending out from one of said ends of the grommet; and a collar member threadably engaged with the external threads of said grommet;
characterized in that said internally threaded hollow portion opens out through the axial end of said grommet from which the threaded shaft portion extends and said plug member is an annular member disposed about said stud bolt, and that said grommet and said plug member have mechanical means for fixing the position of said plug member in said grommet, so that said spherically shaped head is held captive within said spherical cavity as the stud bolt is unscrewed.

The fastener assembly can, when required, be capable of carrying the full static and dynamic loads of the panel/mating structure interface and be flush to the outer surface of the panel when in the installed position.

The fastener assembly comprises a two piece grommet assembly that when assembled provides an adjustable spherical seat for a spherical head bolt. When the head of the bolt is positioned into the grommet and the spherical seat adjusted, the adjustment is fixed by the mechanical means. The remainder of the mating components, the threaded collar and retaining ring, are then loosely installed on the grommet and the complete assembly is packaged for shipment to the end user.

Upon delivery to the end user, the retaining ring and threaded collar are removed from the grommet assembly and the grommet assembly is inserted into a prepared aperture in a mating panel. The threaded collar is then reinstalled onto the grommet assembly using a commercially available thread locking compound, thereby captivating the grommet assembly to the mating panel. The threaded collar is provided with a lug portion having an aperture for a rivet. A rivet is then inserted through a prepared aperture in the mating panel and rivet aperture of the threaded collar and fixed by mechanical means to prevent rotation/loosening of the threaded collar. The retaining ring, which provides back-up retention for the grommet assembly should it loosen, is then reinstalled on the grommet assembly to complete the installation process. The spherical head bolt can swivel in all directions and the grommet/ball seat assembly protects the lower surface of the panel from damage while the bolt head is maintained flush with the upper surface of the panel. The flat surface of the threaded collar provides the bearing surface for the panel against the mating structure thereby protecting the bearing surface of the panel from damage.

The present invention thus provides a fastener assembly especially adapted for use in securing composite panels having curved contours to a mating structure, the fastener assembly being capable of accommodating hinge-line motion/geometry and misalignment of the panel and mating structure up to a predetermined minimum angle as the panel is pulled into the installed contour or position in/on the mating structure. The fastener assembly also lifts the panel from engagement with the mating structure while accommodating the hinge-line motion/geometry and misalignment of the panel and mating structure up to a predetermined minimum angle as the panel is being removed. The fastener assembly can, when required, be capable of carrying the full static and dynamic loads of the panel/mating structure interface and be flush to the outer surface of the panel when in the installed position.

### DESCRIPTION OF THE DRAWINGS

For a better understanding of the invention as well as other objects and further features thereof, reference is made to the following description which is to be read in conjunction with the accompanying drawing wherein:
Figure 1 is a simplified partial perspective view illustrating an aircraft structure in which the fastener assembly of the present invention is preferably utilized;
Figure 2 is a plan view of the structure shown in Figure 1;
Figure 3 is an exploded view of the fastener assembly of the present invention;
Figure 4 is a perspective view of the fastener assembly of the present invention;
Figure 5 is a cross-sectional view along line 4-4 of Figure 4; and

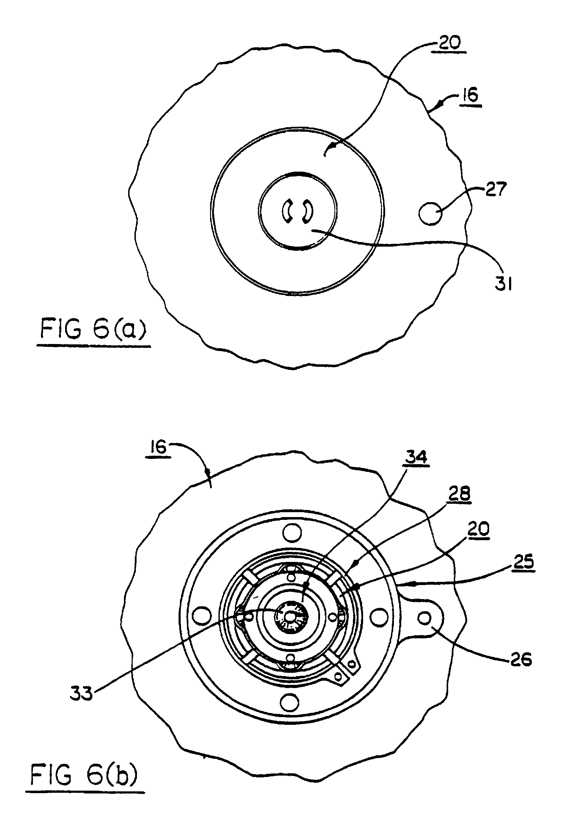

Figure 6(a) is a top view and Figure 6(b) is a bottom view of the assembly shown in Figure 4.

### DESCRIPTION OF THE INVENTION

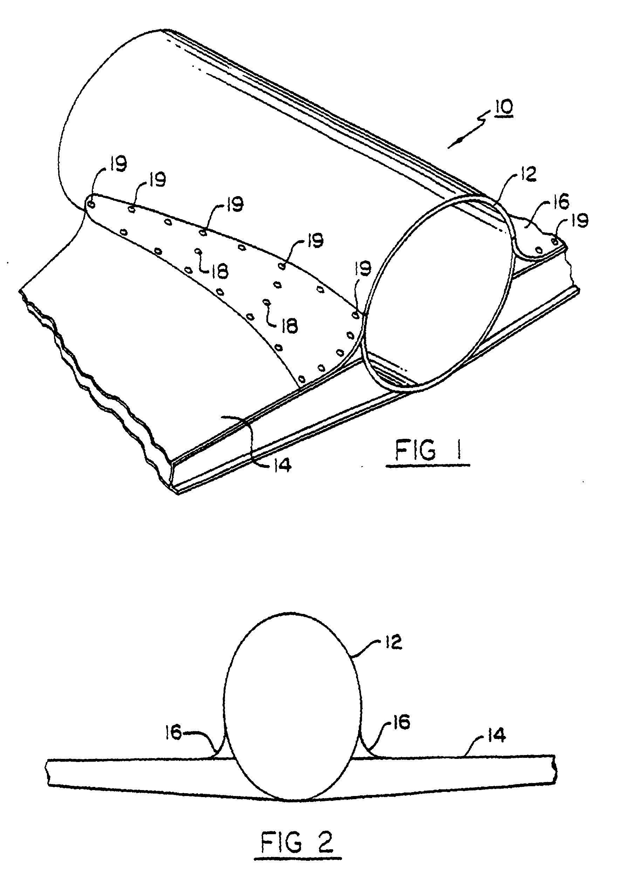

Referring to Figure 1, a perspective view of a portion of an aircraft frame 10 is illustrated. Frame 10 includes representations of a main structure 12 and a wing structure 14. In certain situations, it is required that access panels be secured to the curved surface portions of the aircraft frame 10. Specifically, and as shown in Figure 1, it is necessary to secure access panels 16 (it should be noted that hinged panels can be utilized) between aircraft main structure 12 and wings 14 whereby the panels, when so secured, form a continuous curved surface.

In order to accomplish this, it is necessary that the fastener assembly (schematically represented by reference numerals 18) have the capability of swiveling during the installation process as the panel 16 is pulled into the installation contour or position in/on the mating structures 12 and 14, corresponding apertures 19 for any remaining panel fasteners on the panel being brought into alignment with corresponding apertures in the mating structure for installation of the remaining fasteners. Figure 2 is a plane view of the aircraft frame 10 shown in Figure 1.

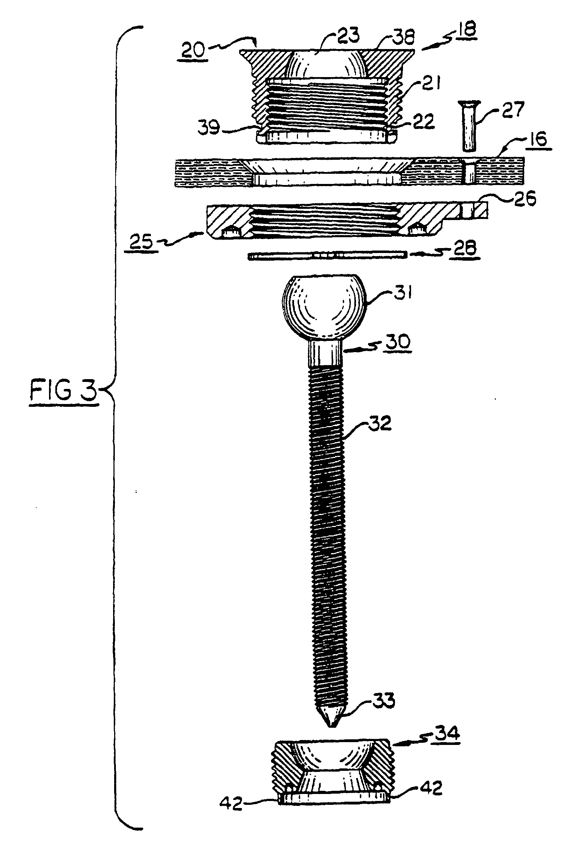

Figure 3 is an exploded view of the fastener assembly 18 of the present invention. Assembly 18 comprises the following five components: internally threaded grommet 20, collar member 25, retaining ring 28, spherical head stud bolt 30 and an externally threaded plug member 34. When assembled, the fastener assembly is positioned within a prepared aperture in panel member 16, panel member 16 in turn being secured to the lug portion 26 of collar member 25 by rivet member 27.

The component assembly procedure is as follows:

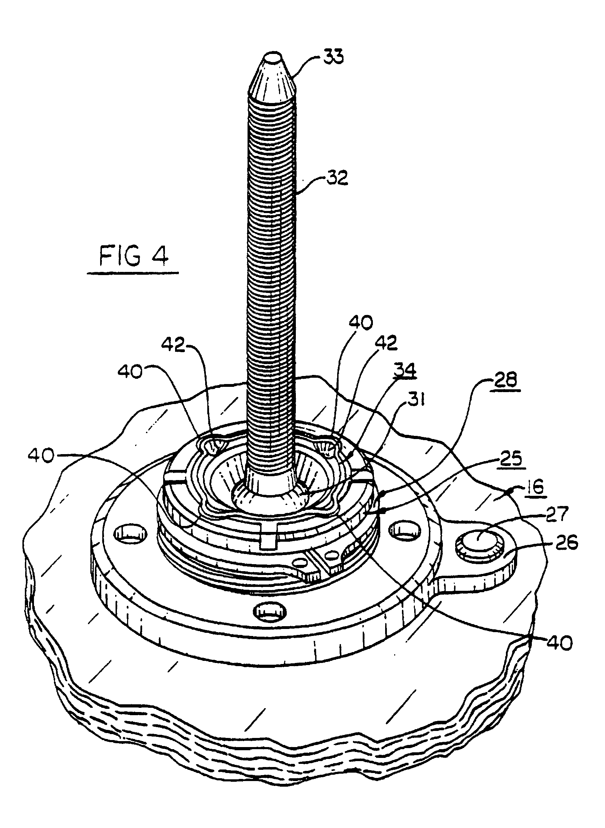

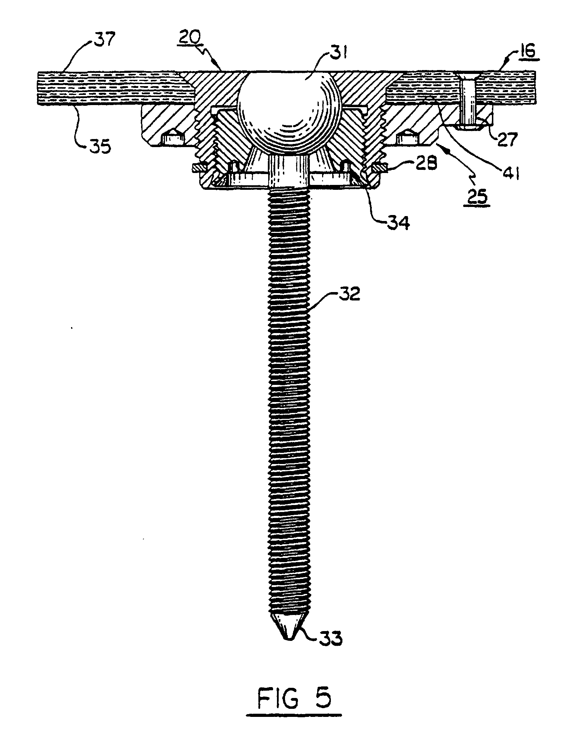

A small amount of anti-seize compound is placed on the spherical head portion 31 of stud bolt 30. The stud bolt 30 also comprises a threaded shaft portion 32 and probe tip portion 33. Grommet 20 has a threaded external portion 21, internal threaded portion 22, and spherical hollow portion 23. The stud bolt 30 is then inserted into grommet 20 and positioned in spherical hollow portion 23 of grommet 20. Plug member 34 is then threaded into the internal threaded portion of the grommet 20 until the plug seats lightly against the spherical head portion 31 of the stud bolt 30. With the plug 34 lightly positioned against the head of the stud bolt 30, the stud bolt 30 is swiveled to both distribute the anti-seize compound and fully seat the stud bolt 30 within the spherical cavity formed by the grommet 20 and plug 34. The position of the plug is adjusted to allow the stud bolt to swivel freely with minimum drag and minimum axial clearance. A staking tool is then aligned with the four cut-outs 40 formed on the bottom surface of grommet 20 and four corresponding plug flanges 42 (Figure 4) are then staked (formed) into the cutouts 46 until it makes contact therewith, thus fixing the adjustment. Collar member 25 is then threaded loosely onto the external thread 21 of grommet 20 and retaining ring 28 is then installed into the retaining ring groove 39 formed in grommet 20, thus completing the assembly as shown in Figure 5. The assembly is then packaged and prepared for shipment to the end user.

The recipient of the packaged fastener assembly then proceeds as follows:

The retaining ring 28 is removed and the collar 25 is unscrewed and removed. The grommet/stud portion of the fastener assembly is then inserted into a prepared aperture in the panel member 16, collar member 25 then being screwed onto the grommet 20 and tightened to the desired torque with the rivet lug portion 26 against the bottom surface of panel member 16 thereby attaching panel member 16 to the grommet/bolt assembly. The aperture in the rivet lug portion 26 is aligned with a prepared aperture in panel member 16, rivet 27 (supplied by the user) then installed through the panel 16 and rivet lug 26 of the collar 25 to prevent rotation and loosening of collar member 25. The retaining ring 28 is then reinstalled into groove 39 on grommet 20 to provide back-up retention for the grommet assembly, should it loosen, thus completing the assembly for the end user. The spherical head portion 31 can swivel in all directions, the grommet/ball seat assembly protecting the lower surface 35 of panel member 16 from damage while head portion 31 is maintained flush with upper surface 37 of the panel member. The flat surface 41 of collar member 25 provides the bearing surface for panel member 16 against the mating structure thereby protecting the bearing surface of thereof from damage.

To remove the installed fastener assembly, the stud bolt 30 is rotated to unscrew it from the mating structure receptacle (not shown) on the frame of the aircraft. As stud bolt 30 unscrews, stud bolt head 31 rotates within the spherical socket created by grommet 20 and plug 34. Since head 31 is captive within the grommet/plug assembly, as the stud bolt 30 is unscrewed, the panel structure to which the assembly is attached will be lifted through the mechanical advantage provided by threads 32.

As noted hereinabove, the fastener assembly of the present invention is utilized to help position a panel for installation of other fasteners on the panel, a particularly useful feature on panels with curved or compound curved surfaces which generally exhibit fit and/or fastener hole misalignment.

While the invention has been described with reference to its preferred embodiment, it will be understood by those skilled in the art that various changes may be made and equivalents may be substituted for elements thereof. In addition, many modifications may be made to adapt a particular situation or material to the teaching of the invention without departing from the scope of the claims.

## Claims

1. A fastener assembly including a bolt having the capability of swivelling to locate and be inserted into an aperture formed in a mating structure comprising:
an annular grommet (20) having an externally threaded portion (21), an internally threaded hollow portion (22) which opens out through one axial end of said grommet (20) and a spherical hollow portion (23) which opens out through the other, opposite axial end (38) of said grommet (20) ;
a stud bolt (30) having a head (31) that is spherically shaped and a threaded shaft portion (32) ;
an externally threaded plug member (34), the plug member (34) being threadably engaged with the internal threaded hollow portion (22) of said grommet (20) to form a spherical cavity for receiving the spherical head portion (31) of said stud bolt (30) and with said threaded shaft portion (37) extending out from one of said ends of the grommet (20); and
a collar member (25) threadably engaged with the external threads (21) of said grommet (20);
**characterized in that** said internally threaded hollow portion (22) opens out through the axial end of said grommet (20) from which the threaded shaft portion (32) extends and said plug member (34) is an annular member disposed about said stud bolt (30), and that said grommet (20) and said plug member (34) have mechanical means (40, 42) for fixing the position of said plug member (34) in said grommet (20), so that said spherically shaped head (31) is held captive within said spherical cavity as the stud bolt (30) is unscrewed.

2. The fastener assembly of claim 1, **characterized by** further including a retaining ring (28) positioned in a groove (39) formed on the external diameter of said grommet (20).

3. The fastener assembly of claim 1, **characterized in that** said grommet (20) is positioned in an aperture formed in a panel member (16).

4. The fastener assembly of claim 3, **characterized in that** a fastener member (27) extends between coaligned apertures formed in said panel member (16) and said collar member (25).

5. The fastener assembly of claim 1, **characterized in that** said threaded shaft portion (32) has a non-threaded tip portion (33) for locating in an aperture formed in a mating structure.

6. The fastener assembly of claim 3, **characterized in that** said panel member (16) has a curved surface.

7. The fastener assembly of claim 1, **characterized in that** said mechanical means has a plurality of cut-outs (40) formed on the bottom surface of said grommet (20) and a plurality of flange members (42) formed on said plug member (34), said flange members (42) being forced into said grommet cut-outs (40) whereby the position of said plug member (34) in said assembly is fixed.

## Patentansprüche

1. Befestigungseinrichtung mit einem Gewindestift, der schwenkbar ist zum Einstellen und Einführen in eine Öffnung, die in einer zugehörigen Struktur geformt ist, mit:
einer Ringhülse (20) mit einem Aussengewindeteil (21), einem hohlen Innengewindeteil (22), der in einem Axialende der Ringhülse (20) nach aussen offen ist, und einem kugelförmigen Hohlteil (23), der am anderen, gegenüberliegenden Axialende (38) der Ringhülse (20) nach aussen offen ist;
einem Gewindestift (30) mit einem Kopf (31), der kugelförmig geformt ist und einem Gewindeschaftteil (32);
einem mit Aussengewinde versehenen Stopfenteil (34), wobei der Stopfenteil (34) in den hohlen Innengewindeteil (22) der Ringhülse (20) eingeschraubt ist, um einen kugelförmigen Hohlraum zu begrenzen zur Aufnahme des kugelförmigen Kopfteiles (31) des Gewindestiftes (30) und wobei der Gewindeschaftteil (32) sich von einem der Enden der Ringhülse (20) nach aussen erstreckt; und
einem Flanschteil (25), der auf das Aussengewinde (21) der Ringhülse (20) aufgeschraubt ist;
**dadurch gekennzeichnet, dass** der hohle Innengewindeteil (22) in dem Axialende der Ringhülse (20) offen ist, durch welches der Gewindeschaftteil (32) sich erstreckt und der Stopfenteil (34) ein Ringteil ist, der um den Gewindestift (30) angeordnet ist, und dass die Ringhülse (20) und der Stopfenteil (34) mechanische Mittel (40, 42) aufweisen zur Befestigung der Lage des Stopfenteiles (34) in der Ringhülse (20), damit der kugelförmige Kopf (31) in dem kugelförmigen Hohlraum zurückgehalten ist wenn der Gewindeschaft (30) losgeschraubt wird.

2. Befestigungseinrichtung nach Anspruch 1, gekennzeichnet des Weiteren durch einen Haltering (28), der in einer Nut (39) sitzt, die im Aussendurchmesser der Ringhülse (20) geformt ist.

3. Befestigungseinrichtung nach Anspruch 1, **dadurch gekennzeichnet, dass** die Ringhülse (20) in einer Öffnung sitzt, welche in einem Paneelteil (16) geformt ist.

4. Befestigungseinrichtung nach Anspruch 3, **dadurch gekennzeichnet, dass** ein Befestigungsglied (27) sich durch miteinander ausgerichtete Öffnungen erstreckt, die in dem Paneelteil (16) und in dem Flanschteil (25) geformt sind.

5. Befestigungseinrichtung nach Anspruch 1, **dadurch gekennzeichnet, dass** der Gewindeschaftteil (32) einen gewindefreien Spitzenteil (33) aufweist zum Einführen in eine in einer zugehörigen Struktur geformte Öffnung.

6. Befestigungseinrichtung nach Anspruch 3, **dadurch gekennzeichnet, dass** das Paneelteil (16) eine gekrümmte Fläche aufweist.

7. Befestigungseinrichtung nach Anspruch 1, **dadurch gekennzeichnet, dass** die mechanischen Mittel eine Vielzahl von Ausschnitten (40) aufweisen, die an der Bodenfläche der Ringhülse (20) geformt sind sowie eine Vielzahl von Vorsprüngen (42) aufweisen, die am Stopfenteil (34) geformt sind, wobei die Vorsprünge (42) in die Ausschnitte (40) der Ringhülse einzudrücken sind, wodurch die Lage des Stopfenteiles (34) in der Einrichtung fixiert ist.

## Revendications

1. Ensemble de fixation incluant un boulon capable de pivoter en vue d'être positionné et introduit dans une ouverture formée dans une structure conjugée comportant :
une pièce annulaire (20) ayant une partie filetée externe (21), une partie creuse (22) pourvue d'un filetage interne débouchant à une extrémité axiale de la pièce annulaire (20) et une partie sphérique creuse (23) qui débouche à l'autre extrémité axiale opposée (38) de la pièce annulaire (20) ;
un goujon fileté (30) ayant une tête (31) de forme sphérique et une partie de tige filetée (32) ;
un élément formant bouchon (34) ayant un filetage externe, l'élément formant bouchon (34) étant vissé dans la partie creuse (22) pourvu d'un filetage interne de la pièce annulaire (20) un vue de former une cavité sphérique pour recevoir la partie de tête sphérique (31) du goujon fileté (30), la partie de tige filetée (32) s'étendant vers l'extérieur par l'une des extrémités de la pièce annulaire (20) ; et
un élément de bague (25) vissé sur le filetage externe (21) de la pièce annulaire (20) ;
**caractérisé en ce que** la partie creuse (22) pourvue d'un filetage interne débouche à l'extrémité axiale de la pièce annulaire (20) de laquelle la partie de tige filetée (32) s'étend et l'élément formant bouchon (34) est un élément annulaire disposé autour du goujon fileté (30), et **en ce que** la pièce annulaire (20) et l'élément formant bouchon (34) ont des moyens mécaniques (40, 42) pour fixer la position de l'élément formant bouchon (34) dans la pièce annulaire (20), de sorte que la tête sphérique (31) soit maintenue captivée à l'intérieur de la cavité sphérique lorsque le goujon fileté (30) est dévissé.

2. Ensemble de fixation selon la revendication 1, **caractérisé en ce qu'**il comporte en outre un anneau de retenue (28) positionné dans une rainure (39) formée dans le diamètre externe de la pièce annulaire (20).

3. Ensemble de fixation selon la revendication 1, **caractérisé en ce que** l'élément annulaire (20) est positionné dans une ouverture pratiquée dans un panneau (16).

4. Ensemble de fixation selon la revendication 3, **caractérisé en ce qu'**un élément de fixation (27) s'étend par des trous co-alignés pratiqués dans le panneau (16) et dans l'élément de bague (25).

5. Ensemble de fixation selon la revendication 1, **caractérisé en ce que** la partie de tige filetée (32) a une partie de tête non-filetée (33) pour réception dans une ouverture formée dans une structure conjugée.

6. Ensemble de fixation selon la revendication 3, caractérisé en ce le panneau (16) a une surface courbe.

7. Ensemble de fixation selon la revendication 1, **caractérisé en ce que** les moyens mécaniques ont une pluralité de découpes (40) formées dans la surface inférieure de la pièce annulaire (20) et une pluralité de saillies (42) prévues sur l'élément formant bouchon (34), les saillies (42) étant forcées dans les découpes (40) de la pièce annulaire pour fixer la position de l'élément formant bouchon (34) dans ledit ensemble de fixation.
